**Europäisches Patentamt**

**European Patent Office**

**Office européen des brevets**

(11) Veröffentlichungsnummer: **0 514 944 A2**

(12) **EUROPÄISCHE PATENTANMELDUNG**

(21) Anmeldenummer: **92108713.6**

(22) Anmeldetag: **22.05.92**

(51) Int. Cl.5: **B60G 11/27**, B60G 11/28, B60G 17/005

(30) Priorität: **24.05.91 DE 9106416 U**

(43) Veröffentlichungstag der Anmeldung:
**25.11.92 Patentblatt 92/48**

(84) Benannte Vertragsstaaten:
**AT DE FR GB IT NL**

(71) Anmelder: **Karl Kässbohrer Fahrzeugwerke GmbH**
**Kässbohrerstrasse 13 Postfach 2660**
**W-7900 Ulm (Donau)(DE)**

(72) Erfinder: **Schall, Hans**
**Martinstrasse 17**
**W-7906 Blaustein(DE)**

(74) Vertreter: **Patentanwälte Grünecker,**
**Kinkeldey, Stockmair & Partner**
**Maximilianstrasse 58**
**W-8000 München 22(DE)**

(54) **Fahrzeug mit mindestens einer über Federbälge luftgefederten Achse.**

(57) Ein Fahrzeug weist mindestens eine über Federbälge luftgefederte Achse auf. Die Federbälge sind an einem Ende an einer am Fahrzeugrahmen ausgebildeten Halterung und an ihrem anderen Ende an einem Abrolltopf gehalten.

Um auch bei mehrfachem Anheben und Absetzen des Fahrzeugs ein beschädigungsfreies Abrollverhalten des Federbalgs zu gewährleisten und daß Undichtigkeiten nicht im Federbalg auftreten, ist beim Anheben des Fahrzeugs zur Begrenzung eines Verlängerungshubs des Federbalgs der Achse und/oder dem Federbalg eine lösbare Hubbegrenzungseinrichtung beigeordnet.

FIG.1

EP 0 514 944 A2

Die Erfindung betrifft ein Fahrzeug mit mindestens einer über Federbälge luftgefederten Achse. Die Federbälge sind an einem Ende an einer am Fahrzeugrahmen ausgebildeten Halterung und an ihrem anderen Ende an ihrem Abrolltopf gehaltert.

Die Federbälge weisen gewöhnlich ein Balgmaterial, bestehend aus Gummi und einer Gewebeeinlage auf. Zur Federung des Fahrzeugs werden die Federbälge unter einem bestimmten Luftdruck gehalten. Beim Federvorgang wird der Federbalg teilweise durch den am Fahrzeugrahmen oder an der Achse angeordneten Abrolltopf komprimiert und dadurch der Innendruck im Federbalg erhöht bzw. wird der Federbalg verlängert und somit der Innendruck reduziert. Entsprechend zum Überdruck im Federbalg wird eine seiner Verformung entgegenwirkende Kraft erzeugt. Bei einem ruhenden Fahrzeug ist der Federbalg teilweise vorkomprimiert, um sowohl einen Verkürzungshub (Stauchung) als auch einen Verlängerungshub (Streckung) durchführen zu können. Zusätzlich kann der Federbalg eine Einrichtung zum Be- bzw. Entlüften aufweisen, wie sie z.B. zur Niveauregulierung verwendet wird. In beiden Fällen ist es offensichtlich, daß der Federbalg für einen sicheren Einsatz als Federungselement luftdicht sein muß.

Wird das Fahrzeug mit entsprechenden Umschlaggeräten durch Anheben beim Huckepack-Verkehr mit Hilfe z.B. der Eisenbahn bzw. durch Teilanheben bei der Schiffsverladung angehoben, werden die Achsen entlastet und hängen infolge ihres Eigengewichts von der Unterseite des Fahrzeugs herab. Nachteilig ist in diesem Zusammenhang, daß die Federbälge stark gestreckt und aufgrund des Unterdrucks in ihnen stark verformt werden. Beim Absetzen des Fahrzeugs rollen insbesondere die zum Inneren des Federbalgs gesogenen Außenwände nicht mehr ordnungsgemäß auf dem Abrolltopf ab. Stattdessen werden die Außenwände zwischen Abrolltopf und Fahrzeugrahmen bzw. Halterung des Federbalgs eingequetscht und beschädigt. Ein auf dem Abrolltopf angeordneter Anschlagknopf, der eine direkte Berührung von Fahrzeugrahmen und Abrolltopf verhindern soll, kann ebenfalls Teile des stark verformten Federbalgs einquetschen und beschädigen.

Als Folge wird der Federbalg schließlich undicht und eine korrekte Federung ist nicht mehr gewährleistet.

Es ist daher Aufgabe der Erfindung, ein Fahrzeug der bekannten Art dahingehend zu verbessern, daß auch bei mehrfachem Anheben und Absetzen des Fahrzeugs ein beschädigungsfreies Abrollverhalten des Federbalgs gewährleistet ist und keine Undichtigkeiten im Federbalg auftreten.

Erfindungsgemäß wird die Aufgabe dadurch gelöst, daß beim Anheben des Fahrzeugs zur Begrenzung eines Verlängerungshubs des Federbalgs der Achse und/oder dem Federbalg eine lösbare Hubbegrenzungseinrichtung beigeordnet ist.

Auf diese Weise wird eine Streckung des Federbalgs beim Anheben des Fahrzeugs soweit begrenzt, daß ein Ansaugen der Seitenflächen des Federbalgs in sein Inneres weitestgehend unterbleibt und beim Absetzen des Fahrzeugs der Federbalg sich auf dem Abrolltopf abrollt und nicht zwischen diesem und Fahrzeugrahmen bzw. Halterung gequetscht wird. Je nach Ausführungsform der luftgefederten Achse kann die Hubbegrenzungseinrichtung direkt der Achse und dem Federbalg, beispielsweise wenn der Federbalg mit der Achse bewegungsverbunden ist, oder bei getrennter Achse und Federbalg einem von beiden beigeordnet werden.

Um gegebenenfalls den maximalen Verlängerungshub des Federbalgs ausnutzen zu können, ist die Hubbegrenzungseinrichung lösbar ausgebildet. Zum Beispiel kann die Hubbegrenzungseinrichtung manuell mit Hilfe einer am Fahrzeug ausgebildeten Einrichtung, wie z.B. Hydraulikoder Pneumatikeinrichtung, aber auch mechanisch gelöst werden.

Bei dem vorbekannten Fahrzeug kann zum Halten der Achse und zur Entlastung des Federbalgs ein Fangseil angeordnet sein, das vom Fahrzeugrahmen herabhängt und die Achse umgibt oder mit der Achse verbunden ist. Bei Anheben des Fahrzeugs ist die Achse maximal bis zum tiefsten Punkt der durch das Fangseil gebildeten Seillänge absenkbar und wird in diesem Punkt vom Fangseil gehalten. Das Fangseil dient dazu, das Eigengewicht der Achse und der ihr zugeordneten Einrichtungen nicht über die Halterungen des Federbalgs und den Federbalg selbst abzufangen. Der Verlängerungshub des Federbalgs wird durch das Fangseil nicht begrenzt, sondern vollständig ausgenutzt. Eine Verbesserung des Abrollverhaltens des Federbalgs nach Anheben des Fahrzeugs ist mit Hilfe des Fangseils nicht erreichbar.

Bei einer Ausführungsform der Erfindung ist der Federbalg oberhalb eines Abrolltopfes angeordnet, der mit seinem Abrollkörper auf einem am Fahrzeugrahmen verschwenkbar gelagerten und mit der Achse bewegungsverbundenen Längsträger angeordnet. Die Hubbegrenzungseinrichtung kann direkt mit dem Längsträger zusammenwirken, wobei aufgrund der Lagerung des Längsträgers die Achse entlang einer Kreislinie geführt wird und dadurch prinzipiell automatisch näher an die Hubbegrenzungseinrichtung heranführbar ist.

Bei einer günstigen Ausführungsform ist die Hubbegrenzungseinrichtung am Fahrzeugrahmen gelagert. In diesem Zusammenhang ist es insbesondere von Vorteil, wenn die Hubbegrenzungseinrichtung zwischen einer Arretierstellung und einer Freigabestellung am Fahrzeugrahmen verschwenkbar gelagert ist. Auf diese Weise kann sowohl automatisch als auch manuell die Hubbegrenzungseinrichtung in einfacher Weise betätigt werden. Vor Anheben des Fahrzeugs kann die Hubbegrenzungseinrichtung in die Arretierstellung verschwenkt und die Achse direkt oder kurz nach Einleiten des Anhebens arretiert werden. Nach Absenken des Fahrzeugs wird die Hubbegrenzungseinrichtung in die Freigabestellung verschwenkt werden. Somit ist das Fahrzeug und seine Federung wieder einsatzbereit.

Bei einer günstigen Ausführungsform ist die Hubbegrenzungseinrichtung zum Halten der Achse in wenigstens einer Stellung als Haltehaken mit wenigstens einer Haltenase ausgebildet, welche mit einer an der Achse angeordneten Halteeinrichtung in Eingriff steht. In diesem Zusammenhang ist es auch möglich, den Haltehaken so auszubilden, daß er die Achse direkt an einer Stelle umgreift und so fixiert. Weiterhin kann die Haltenase als Rasteinrichtung ausgebildet sein, die beim Anheben des Fahrzeugs mit der Halteeinrichtung in Berührung kommt und mit dieser verrastet.

Bei einer einfachen Ausführungsform ist die Halteeinrichtung mit einem in Richtung des Haltehaken abstehenden Haltebügel ausgebildet. Dieser gerät in Anlage mit der Haltenase der Hubbegrenzungseinrichtung, wenn diese in Arretierstellung verschwenkt ist. Um ggf. die Achse auch in mehreren Stellungen entlang des Verlängerungshubs des Federbalgs festzulegen, weist der Haltehaken mehrere Haltenasen mit jeweils einer Aufnahmemulde für den Haltebügel und eine zwischen benachbarten Haltenasen verlaufende Gleitschräge auf. Entsprechend des Abstandes der Haltenasen sind die verschiedenen Stellungen der Achse vorgegeben. Durch die Aufnahmemulde ist der Haltebügel sicher aufgenommen. Mit Hilfe der Gleitschräge wird ein Verhaken der Achse unterhalb der Haltenasen verhindert.

In diesem Zusammenhang ist es insbesondere günstig, wenn die Gleitschräge in Richtung des Fahrzeugrahmens unter einem spitzen Winkel in Richtung zur Achse geneigt verläuft. Die Gleitschräge sichert auf diese Weise das Gleiten des Haltebügels zwischen aufeinanderfolgenden Aufnahmemulden und erleichtert das Einrasten.

Um ein selbsttätiges Einrasten des Haltebügels zu gewährleisten, ist es von Vorteil, wenn der Haltebügel wenigstens in Richtung seiner Arretierstellung kraftbeaufschlagt ist. Dadurch wird der Haltehaken in Richtung des Haltebügels gedrückt und bei einem Anheben des Fahrzeugs gleitet der Haltehaken in die nächsttiefere Aufnahmemulde. Dies gewährleistet insbesondere bei verschiedenen Schrägstellungen des Fahrzeugs und entsprechenden unterschiedlichen Verlängerungshüben der Federbälge ein Einrasten des Haltebügels in die nächstgelegene Aufnahmemulde. Bei nur einer Aufnahmemulde ist insbesondere bei einem schrägstehenden Fahrzeug der Gleitweg der Achse entlang des Haltehakens beim Anheben des Fahrzeugs relativ lang, da bei Ausbildung des Haltehakens mit nur einer Aufnahmemulde diese vorzugsweise an seinem Ende ausgebildet ist.

Um in einfacher Weise die Hubbegrenzungseinrichtung verschwenkbar auszubilden, ist es von Vorteil, wenn der Haltehaken als zweiarmiger Hebel ausgebildet ist, wobei an einem der Achse zugeordneten Achshebelarm die Haltenasen ausgebildet sind und an dem anderen Schwenkhebelarm ein Antrieb zum Verschwenken des Haltehakens um ein Hebeldrehlager angeordnet ist. Der Antrieb ist manuell mit mechanischen oder unter Zuhilfenahme des am Fahrzeug vorhandenen Hydraulik- oder Pneumatiksystems betätigbar. Auf diese Weise ist der Haltehaken einfach und schnell zwischen Arretierstellung und Freigabestellung verschwenkbar.

Bei einer vorteilhaften Ausführungsform ist der Antrieb als doppeltwirkender Pneumatikzylinder ausgebildet. Aufgrund der Doppelwirkung, d.h. des in zwei Richtungen wirkenden Pneumatikzylinders, ist ein Verschwenken des Haltehakens einfach möglich.

Bei einer anderen einfachen Ausführungsform ist zum Halten des Haltehakens in seiner Arretier- und/oder Freigabestellung wenigstens ein Federelement zwischen Fahrzeugrahmen und dem Haltehaken angeordnet. Das Federelement ist auch gleichzeitig mit dem Pneumatikzylinder einsetzbar. Falls das Pneumatiksystem des Fahrzeugs ausfällt, wird die Hubbegrenzungseinrichtung durch das Federelement gesichert ( = Totpunktsicherung).

Dabei ist es insbesondere von Vorteil, wenn das Federelement mit einem Ende am Fahrzeugrahmen oberhalb des Hebeldrehlagers und dem Hebeldrehlager in Richtung der Arretierstellung des Haltehakens vorgeordnet und mit ihrem anderen Ende am Achshebelarm angeordnet ist. Durch diese Anordnung der Enden des Federelements relativ zum Hebeldrehlager wird zur Sicherung des Hakens bei Druckverlust über einen Totpunkt der Haken in verriegelter oder entriegelter Stellung gehalten.

Bei einem Fahrzeug mit pneumatisch be- und entlüftbaren Federbälgen ist es von Vorteil, wenn der Pneumatikzylinder in Abhängigkeit von den Federbälgen zugeordneten Hebe- und Senkventilen steuerbar ist. Damit ist in einfacher Weise eine automatische Steuerung der Hubbegrenzungseinrichtung möglich. Beim Anheben des Fahrzeugs wird aufgrund des Unterdrucks am Hebeventil der Haltehaken in seine Arretierstellung verschwenkt. Beim Absenken des Fahrzeugs aufgrund des Überdrucks am Senkventil wird der Haltehaken in seine Freigabestellung verschwenkt.

Bei einer weiteren Ausführungsform der Erfindung sind zum Be- und Entlüften die Luftfederbälge mit einem Druckvorratsbehälter verbunden. Auf diese Weise wird beim Anheben des Fahrzeugs durch das Hebeventil der Federbalg belüftet und beim Absenken des Fahrzeugs mittels des Senkventils entlüftet. Alternativ zur Begrenzung des Verlängerungshubs und damit zur Begrenzung des Unterdrucks im Federbalg sind somit die Federbälge mit einem vorgegebenen Druck beaufschlagbar.

Dabei erweist es sich als vorteilhaft, wenn zwischen den Federbälgen und dem Druckvorratsbehälter wenigstens ein steuerbares Zweiwegeventil angeordnet ist. Mittels des Zweiwegeventils sind die Federbälge be- und entlüftbar. Dabei ist es möglich, wenigstens ein Unterdruckventil einer Achse zuzuordnen oder jedem Federbalg einer Achse ein entsprechendes Ventil zuzuordnen.

Günstig ist auch, wenn das Zweiwegeventil zur Aufrechterhaltung eines jeweils vorgegebenen Innendrucks im Federbalg mit Meßeinrichtungen zur Bestimmung des Unter- und/oder Überdrucks beim Anheben und/oder Absenken des Fahrzeugs verbunden ist. Auf diese Weise ist ein Be- und Entlüften der Federbälge automatisch durchführbar. Als vorgegebener Innendruck im Federbalg ist z.B. der Druck im abgesetzten Zustand des Fahrzeugs verwendbar. Ebenfalls ist es möglich, für den angehobenen Zustand des Fahrzeugs einen geringeren Innendruck vorzugeben, der allerdings groß genug ist, um ein Einsaugen der Seitenwände des Federbalgs zu verhindern.

Bei einer weiteren Ausfünrungsform sind der Pneumatikzylinder und/oder das Zweiwegeventil zur Betätigung der Federbälge manuell steuerbar. Die manuelle Betätigung kann aus der Fahrerkabine des Fahrzeugs erfolgen.

Bei größeren Fahrzeugen mit zwei- oder dreiachsigen Achsaggregaten ist es vorteilhaft, wenn die Federbälge zumindest eines Achsaggregats gleichzeitig be- oder entlüftbar sind. Dabei kann jede einzelne Achse des Achsaggregats mit den entsprechenden Ventilen versehen sein oder ein Ventil steuert die Be- und Entlüftung des gesamten Achsaggregats.

Auch bei Ausfall der Hubbegrenzungseinrichung ist aufgrund der Ent- bzw. Belüftung der Federbälge ein zu großer Unterdruck bzw. Überdruck beim Anheben bzw. Absenken des Fahrzeugs verhinderbar. So ist mittels des Druckvorratsbehälters und entsprechender Zweiwegeventile der Innendruck im Federbalg steuerbar, wobei beim Anheben des Fahrzeugs der Federbalg soweit belüftet wird, daß seine Seitenwände nicht oder nur sehr wenig nach innen gesogen werden und beim Absenken des Fahrzeugs der Innendruck soweit und so langsam reduziert wird, daß sich der Federbalg korrekt auf dem Abrolltopf abrollt.

Meßeinrichtungen an den Federbälgen messen den entsprechenden Ein- bzw. Ausfederweg beim Anheben oder Absenken des Fahrzeugs und können in bekannter Weise das Zweiwegeventil zum Be- oder Entlüften umschalten. Bei einer weiteren Ausführungsform kann das Zweiwegeventil auch indirekt über eine Steuerleitung durch ein Sperrventil gesteuert werden, das das Zweiwegeventil umschaltet. Weiterhin ist es möglich, zur teilweisen Selbstbelüftung der Federbälge diese beim Anheben des Fahrzeuges über ein Ventil direkt mit atmosphärischer Luft zumindest teilweise zu belüften. Ein noch fehlender Restinnendruck zur Aufrechterhaltung der Form des Federbalgs wird dann über das vorher geschilderte System mit dem Zweiwegeventil zugeführt.

Die erfindungsgemäß vorgeschlagenen Lösungen und vorteilhafte Ausführungsbeispiele davon werden im folgenden anhand der in der Zeichnung dargestellten Figuren weiter erläutert und beschrieben.

Es zeigen:

Figur 1     ein Fahrzeug mit einem mittleren Verlängerungshub eines Federbalgs;

Figur 2     das Fahrzeug im angehobenen Zustand;

Figur 3     das Fahrzeug im maximal abgesenkten Zustand;

Figur 4     eine Ausführungsform einer Hubbegrenzungseinrichtung, und

Figur 5     eine Schnittdarstellung entlang der Linie V-V aus Figur 4.

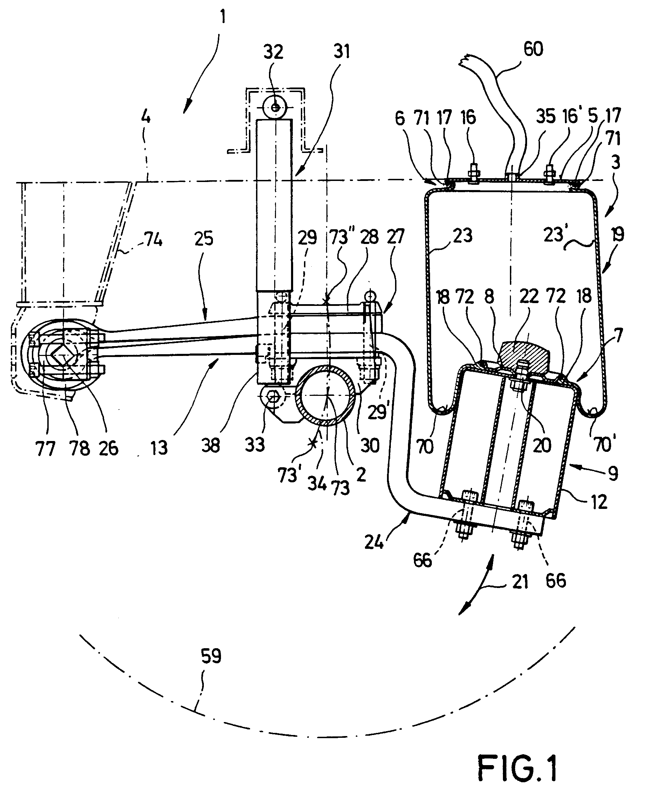

In Figur 1 ist von dem erfindungsgemäßen Fahrzeug 1 im Detail eine Achse 2 mit einer zugehörigen Federungseinrichtung dargstellt. Die im Fahrzeug 1 ausgebildeten elektrischen, pneumatischen und hydraulischen Systeme sind prinzipiell bekannt und daher nicht dargestellt. Ein Fahrzeugrahmen 4 ist stark vereinfacht dargestellt, da auch dessen Aufbau einem Fachmann allgemein bekannt ist.

An der Achse 2 sind beidseitig ein oder mehrere um die Drehachse 73 drehbare Reifen 59 angeordnet. Zur Federung der Achse 2 ist diese mit dem Fahrzeugrahmen 4 über einen Längslenker 13 und einen Federbalg 3 verbunden. Zur Dämpfung der Federung ist ein Stoßdämpfer 31 ebenfalls zwischen Achse 2 und Rahmen 4 angeordnet.

Der Längslenker 13 umfaßt zum Beispiel einen Federbalglenker 24 und einen Zuglenker 25. Beide sind mit konzentrisch zueinander angeordneten Endabschnitten 77 und 78 an einem Längsträgerlager 26 verschwenkbar gelagert. Dieses ist in einem Lagerrahmen 74 unterhalb des Fahrzeugrahmens 4 angeordnet.

Vom Längsträgerlager 26 erstreckt sich der Längslenker 13 in Richtung der Fahrzeugachse 2 bis zum Abrolltopf 9. Mittels eines Halterahmens 27 sind Fahrzeugachse 2 und Längslenker 13 bewegungsverbunden. Der Halterahmen 27 umfaßt im vorliegenden Fall eine Abschlußplatte 28, die auf dem Zuglenker 25 aufliegt und Halteschrauben 29 und 29' die den Halterahmen und damit Zuglenker 25 und Federbalglenker 24 mit einem an der Achse angeordneten Befestigungsflansch 30 verbinden. Der Befestigungsflansch 30 weist eine in etwa ebene Oberfläche auf, die der Abschlußplatte 28 gegenüberliegt und zwischen denen Zuglenker 25 und Federbalglenker 24 eingeschlossen sind.

Am Befestigungsflansch 30 ist seitlich zur Fahrzeugachse der untere Lagerpunkt 33 des Stoßdämpfers 31 angeordnet. Am oberen Ende ist der Stoßdämpfer an einem Lagerpunkt 32 am Rahmen 4 des Fahrzeugs 1 gelagert. Zur Längenveränderung des Stoßdämpfers 31 weist dieser einen ausschiebbaren Kolben 38 auf, der am unteren Lagerunkt 33 verschwenkbar gelagert ist.

Vom Längsträgerlager 26 erstreckt sich der Längslenker 13 in Richtung der Fahrzeugachse 2 bis zum Abrolltopf 9.

Am freien Ende des Federbalglenkers 24 ist ein Abrolltopf 9 mit Hilfe Schrauben 66 befestigt. Dieser weist im wesentlichen eine zylindrische Form auf und trägt an seinem oberen Ende eine Halterung 8 und einen knopfförmigen Puffer 22, die mittels eines Befestigungsbolzens 20 am oberen Ende des Abrolltopfes 9 befestigt sind.

Zwischen dem Abrolltopf 9 und dem Fahrzeugrahmen 4 ist ein Federbalg 3 angeordnet. Dieser ist an seinem oberen Ende 6 an einer Halterung 5 am Rahmen 4 und an seinem unteren Ende 7 an der Halterung 8 des Abrolltopfes 9 gehalten. Der Federbalg 3 umfaßt ein verformbares Balgelement 19, welches im wesentlichen zylindrisch ausgebildet ist. Dessen oberer Rand 17 ist in einem aufeinanderzu weisenden und umgefalzten Randbereich 71 der Halterung 5 befestigt. Der untere Rand des Balgelement 19 liegt auf dem Abrolltopf 9 auf und ist zwischen einem nach oben abstehenden, konvex gekrümmten Rand 72 der Halterung 8 und dem Abrolltopf 9 befestigt. Die Seitenwände 23 und 23' des Balgelements 19 erstrecken sich im wesentlichen senkrecht zum Rahmen 4 und weisen seitlich an einem Abrollkörper 12 des Abrolltopfes 9 anliegende Taschen 70 und 70' auf.

Die am Fahrzeugrahmen 4 angeordnete Halterung 5 ist mit mit dem Innenraum des Federbalgs verbundenen Befestigungsschrauben 16 und 16' ausgebildet. Zwischen den beiden Ventilen ist an einem Druckluftanschluß 35 eine Druckluftleitung 60 zum Be- und Entlüften des Federbalgs 3 angeschlossen.

Bei Bewegung der Achse 2 entlang der Kreislinie 34 um die Drehachse 73 bewegt sich der Längslenker 13 und der Abrolltopf 9 in Richtungen 21. Ist die Achse 2 mit ihrer Drehachse in der Position 73' angeordnet, ist der Abrolltopf 9 in seiner tiefsten Stellung, währnd bei einer Anordnung der Drehachse in der Position 73'' der Abrolltopf 9 in seiner höchsten Stellung angeordnet ist. Diese Positionen werden im folgenden näher beschrieben.

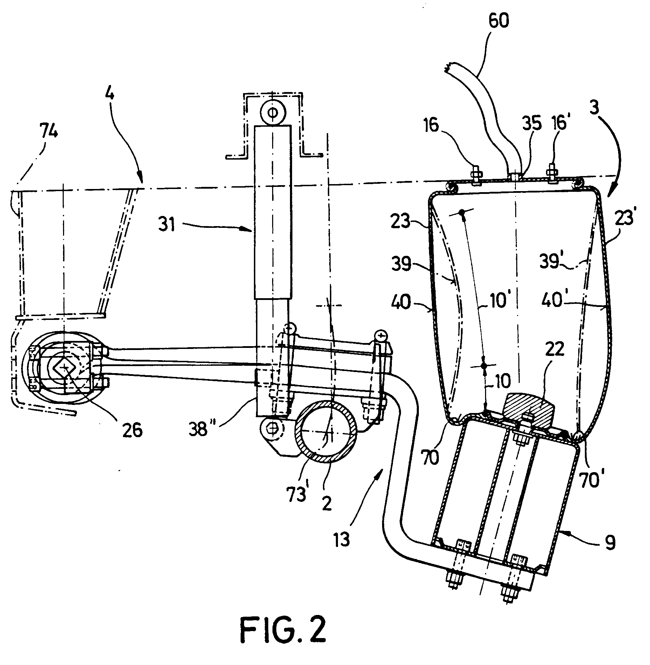

In Figur 2 ist der Abrolltopf 9 in seiner tiefsten Position dargestellt. Gleiche Teile sind in Figur 2 wie auch in den folgenden Figuren mit gleichen Bezugzeichen versehen und werden nur noch teilweise erwähnt.

Entsprechend zur Anordnugn des Abrolltopfes 9 ist auch die Achse 2 mit ihrer Drehachse in der tiefsten Stellung 73' angeordnet und der Kolben 38'' des Stoßdämpfers 31 ist maximal ausgefahren.

Im Vergleich zum in Figur 1 dargestellten Federbalg 3 ist der Federbalg aus Figur 2 um den Verlängerungshub 10 verlängert, so daß die Taschen 70 und 70' nahezu vollständig verschwunden sind .Durch Belüftung des Federbalgs 3 mittels der Druckluftleitung 60 und des Druckluftanschlusses 35 sind die Seitenwände 23 und 23' in einer leicht nach außen gewölbten Belüftungsstellung 40 bzw. 40' angeordnet. Ist der Federbalg 30 um den Verlängerungshub 10 ohne Druckluftzufuhr durch Druckluftleitungen 60 verlängert, sind die Seitenwände 23 und 23' in der nach innen gewölbten Unterdruckstellung 39 und 39' angeordnet.

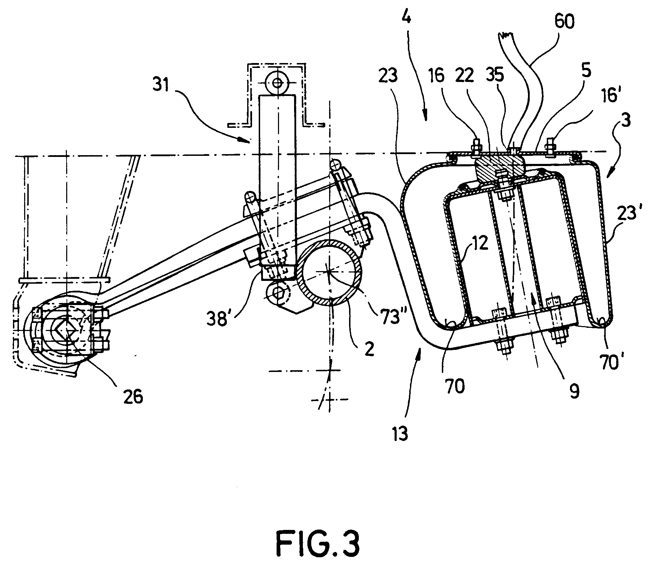

Der in Figur 2 dargestellte Verlängerungshub 10' entspricht dem Hub von dem in Figur 3 dargestellten Federbalg relativ zu dem in Figur 1 dargestellten Federbalg.

In Figur 3 ist die Achse 2 in ihrer dem Rahmen am nächsten liegenden Stellung dargestellt. Die Drehachse ist in der in Figur 1 mit 73'' gekennzeichneten Stellung angeordnet. Der Längslenker 13 ist um die Längslenkerdrehachse 26 bis nahezu an den Rahmen 4 verschwenkt dargestellt. Der Kolben 38' des Stoßdämpfers 31 ist maximal in diesen eingeschoben.

Die Seitenwände 23 und 23' des Federbalgs 3 bilden die Taschen 70 und 70', die den Abrollkörper 12 des Abrolltopfes 9 nahezu vollständig bedecken. Der am oberen Ende des Abrolltopfes 9 angeordnete Puffer 22 ist mit der oberen Halterung 5 des Federbalgs 3 in Anlage. Mittels der Druckluftleitung 60 und/oder der Ventile 16 und 16' ist der Federbalg 3 bei Annäherung des Abrolltopfes an die Halterung 5 entlüftbar.

Aufgrund der gesteuerten Belüftung nach Figur 2 und der gesteuerten Entlüftung nach Figur 3 sind die Seitenwände 23 und 23' des Federbalgs 3 unter Bildung der Taschen 70 und 70' entlang des Abrollkörpers 12 des Abrolltopfes 9 abrollbar. Zwischen der Halterung 5 und dem Puffer 22 bzw. dem Abrolltopf 9 sind keine Abschnitte der Seitenwände 23 bzw. 23' eingeklemmt.

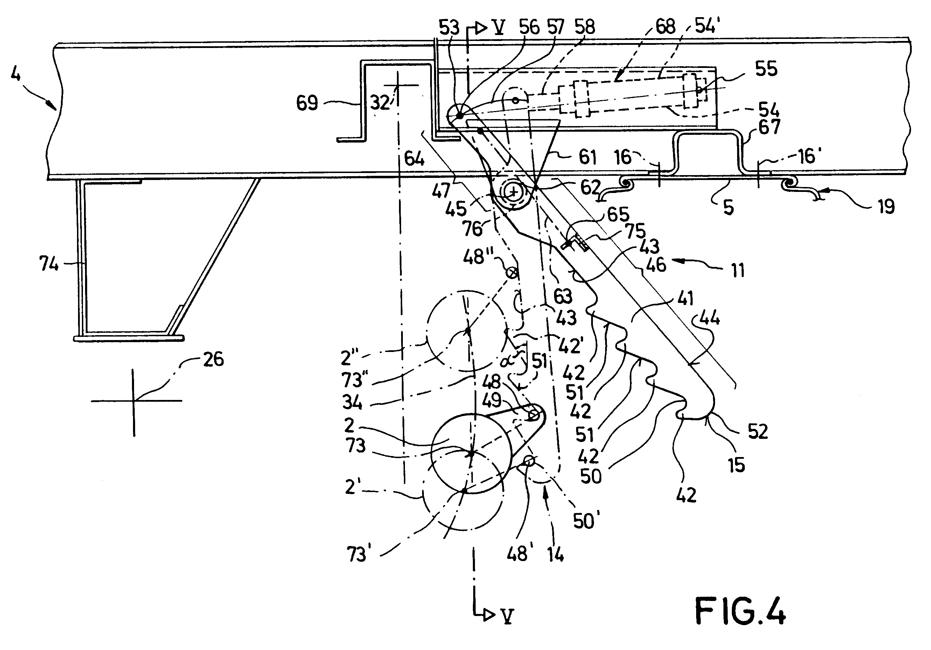

In Figur 4 ist eine Hubbegrenzungseinrichtung 11 dargestellt. Gleiche Teile sind wiederum mit gleichen Bezugszeichen versehen und werden nur noch teilweise erwähnt.

Die Hubbegrenzungseinrichtung umfaßt einen in einem Drehlager 45 verschwenkbar gelagerten Haltehaken 41. Dieser ist als zweiarmiger Hebel mit einem Schwenkhebelarm 47 und einem Achshebelarm 46 ausgebildet. Der Achshebelarm 46 weist auf seiner der Achse 2 zuweisenden Vorderseite 43 mehrere Haltenasen 42, Aufnahmemulden 50 und Gleitschrägen 51 auf. Die erste Haltenase 42 ist nahe dem unteren Ende 52 des Haltehakens 41 angeordnet. In gleichmäßigen Abständen sind in Richtung des Drehlagers 45 die weiteren Haltenasen 42 angeordnet. Zwischen jeweils benachbarten Haltenasen ist die Gleitschräge 51 angeordnet, die in Richtung des Fahrzeugsrahmens 4 um einen spitzen Winkel α in Richtung der Achse 2 geneigt verläuft.

Die Hinterseite 44 des Haltehakens 41 verläuft im wesentlichen gerade, wobei sie am unteren Ende 52 gekrümmt in Richtung der ersten Haltenase 42 der Vorderseite 43 verläuft.

Ist der Haltehaken 41 aus einer Freigabestellung 15 in seine Arretierstellung 14 verschwenkt, ist er in etwa vertikal zum Rahmen 4 angeordnet. An der Achse 2 ist mittels eines in Richtung des Haltehakens 41 abstehenden Flansches ein Haltebügel 48 gelagert. Dieser ist bei Bewegung entlang des Schwenkkreises 34 in einer Aufnahmemulde 50 des Haltehakens 41 in Arretierstellung 14 anordbar. Ist die Achse 2 mittels des in Figur 4 nicht dargestellten Längsträgers 13 um das Längsträgerlager 26 in die Position 2' verschwenkt, steht der Haltebügel 48' mit der Aufnahmemulde 50' in Eingriff. In der höchsten Position ist die Achse 2'' mit ihrem Haltebügel 48'' oberhalb der Aufnahmemulden des Haltehakens angeordnet und mit seiner Vorderseite in Anlage.

Die unterste Position 2' der Achse ist gegenüber der in Figur 2 dargestellten Position näher zum Fahrzeugrahmen 4 angeordnet.

Zum Verschwenken des Haltehakens 41 um das Drehlager 45 ist an seinem oberen Ende 53 ein Pneumatikzylinder 54 mit seinem beweglichen Kolben 58 gelagert. Dabei ist dem Pneumatikzylinder am Schwenkhebelarm 47 des Haltehakens 41 der Lagerpunkt 56 nahe dem oberen Ende 53 und am gegenüberliegenden Ende ein am Fahrzeugrahmen 4 festgelegter Lagerpunkt 55 zugeordnet. Bei Betätigung des Pneumatikzylinders 54 ist der Kolben 58 entlang der Betätigungskreislinie 57 bewegbar. In der Arretierstellung 14 des Haltehakens 41 ist der Pneumatikzylinder in der Position 54' im wesentlichen parallel zum Fahrzeugrahmen 4 angeordnet. In der Freigabestellung 15 des Haltehakens 41 ist der Pneumatikzylinder 54 unter einem spitzen Winkel in Richtung der Achse 2 nach unten verschwenkt am Rahmen 4 angeordnet.

Der Pneumatikzylinder 54 ist in einem im wesentlichen rechteckigen Gehäuse 68 angeordnet. Dieses weist zur Durchführung des Schwenkhebelarms 47 eine nach unten weisende Öffnung auf, an der beidseitig V-förmige Lagerflansche 61 zur Lagerung eines Schwenkbolzens 62 des Haltehakens 41 angeordnet sind.

Zur Aufnahme des Schwenkbolzens 62 weist der Lagerflansch 61 eine konzentrisch zur Drehachse 45 angeordnete Drehlagerbuchse 76 auf.

An einem Ende des Gehäuses 68 des Pneumatikzylinders 54 ist ein im wesentlichen U-förmiger, nach unten geöffneter Rahmen 69 zur Aufnahme des oberen Lagerpunktes 32 des in Figur 4 nicht dargestellten Stoßdämpfers angeordnet. Am gegenüberliegenden Ende des Gehäuses 68 ist ein ebenfalls U-förmiger und nach unten geöffneter Rahmen 67 zur Lagerung des Gehäuses auf der Halterung 5 des Balgelements 19 ausgebildet. Die Schrauben 16 und 16' sind beidseitig zum Rahmen 67 anordbar, wobei die Druckluftleitung und der zugeordnete Druckluftanschluß gemäß der Figuren 1 bis 3 zur Vereinfachung in Figur 4 nicht dargestellt sind. Gemäß einer Ausführungsform der Erfindung ist aufgrund der Hubbegrenzungseinrichtung 11 eine Verbindung des Balgelements 19 mit einer Druckluftleitung oder die Anordnung von Schrauben 16 und 16' nicht notwendig.

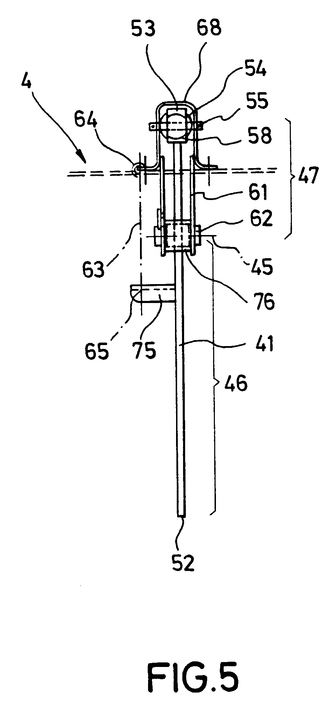

In Figur 5 ist ein Schnitt entlang der Linie V-V aus Figur 4 dargestellt. Der Haltehaken 41 ist im wesentlichen vertikal zum Fahrzeugrahmen 4 angeordnet. Sein oberes Ende 53 ist innerhalb des Gehäuses 68 mit dem Kolben 58 des Pneumatikzylinders 54 verbunden. Der Pneumatikzylinder 54 ist im Gehäuse 68 um die Lagerachse 55 verschwenkbar angeordnet. In Richtung des Haltehakens 41 ist das Gehäuse 68 geöffnet und weist beidseitig zum Haltehaken Lagerflansche 61 zur Lagerung des Schwenkbolzens 62 auf. Mittels dieses Schwenkbolzens ist der Haltehaken um Drehachse 45 verschwenkbar. Konzentrisch zum Drehbolzen 62 ist zwischen den Lagerflanschen 61 eine Drehlagerbuchse 76 angeordnet.

Auf einer Seite des Haltehakens 41 ist ein Federelement 63 zwischen dem Fahrzeugrahmen 4 und dem Achshebelarm 46 angeordnet. An seinem oberen Ende 64 ist das Federelement 63 am Rahmen 4 gelagert und an seinem unteren Ende 65 ist es an einem senkrecht vom Achshebelarm 46 abstehenden Haltearm 75 gelagert. Das Federelement verläuft im wesentlichen parallel zum Haltehaken 41. Wie in Figur 4 dargestellt ist, ist das obere Ende 64 des Federelements 63 oberhalb und in Richtung der Achse 2 vorgeordnet zur Drehachse 45 des Haltehakens 41 angeordnet. Das untere Ende 65 ist unterhalb der Drehachse und in etwa mittig zum Haltehaken 41 angeordnet. In der Arretierstellung 14 verläuft das Federelement 63 bezüglich der Drehachse 45 in Richtung der Achse 2 vor dieser und in der Freigabestellung hinter dieser.

Die Funktionsweise der Hubbegrenzungseinrichtung im Zusammenhang mit der Be- und Entlüftung des Federbalgs wird im folgenden kurz erläutert.

In der Figur 4 ist ersichtlich, daß beim Anheben des Fahrzeugs der Haltebügel 48 in eine Aufnahmemulde 50 des in Arretierstellung 14 befindlichen Haltehakens 41 gleitet. Auch bei einem weiteren Anheben des Fahrzeugs ist die Achse 2 auf diese Weise festgelegt und der Verlängerungshub des Federbalgs 3 ist begrenzt. Je nach Zustand des Fahrzeuges kann sich die Achse in einer Stellung 2'' oder 2' befinden.

Beim Absetzen des Fahrzeugs bewegen sich die Achsen in Richtung des Fahrzeugrahmens 4 und geben den Haltehaken 41 frei, der darauffolgend in seine Freigabeposition 15 verschwenkt wird.

Gleichzeitig mit der Hubbegrenzungseinrichtung 11 kann bei einem be- und entlüftbaren Federbalg 3 gemäß der Figuren 1 bis 3 je nach Stellung der Achse 2 der Federbalg bei einem Anheben des Fahrzeugs gemäß Figur 2 belüftet und bei einem Absenken des Fahrzeugs gemäß Figur 3 entlüftet werden. Durch kontrollierte Be- und Entlüftung wird bei dem Ausführungsbeispiel gemäß der Figuren 1 bis 3 die Wirkung der Hubbegrenzungseinrichtung 11 unterstützt. Der Federbalg 3 rollt auch bei einem schnellen Absetzen des Fahrzeugs aus der angehobenen Position korrekt auf dem Abrollkörper 12 des Abrolltopfes 9 ab. Beidseitig zum Abrolltopf 9 bilden sich die Taschen 70 und 70' aus, wodurch ein Einklemmen und Quetschen des Balgelements zwischen Puffer 22 bzw. Abrolltopf 9 und Halterung 5 bzw. Fahrzeugrahmen 4 unterbleibt.

Bei pneumatisch betätigbaren Federbälgen ist auch ein Einsatz der kontrollierten Be- und Entlüftung ohne Verwendung einer Hubbegrenzungseinrichtung 11 möglich.

**Patentansprüche**

1. Fahrzeug (1) mit mindestens einer über Federbälge (3) luftgefederten Achse (2), wobei die Federbälge an einem Ende (6) an einer am Fahrzeugrahmen (4) ausgebildeten Halterung (5) und an ihrem anderen Ende (7) an einem Abrolltopf (9) gehaltert sind, **dadurch gekennzeichnet,** daß beim Anheben des Fahrzeugs (1) zur Begrenzung eines Verlängerungshubs (10, 10') des Federbalgs (3) der Achse (2) und/oder dem Federbalg (3) eine lösbare Hubbegrenzungseinrichtung (11) beigeordnet ist.

2. Fahrzeug nach Anspruch 1, **dadurch gekennzeichnet,** daß der Abrolltopf (9) mit seinem Abrollkörper (12) auf einem am Fahrzeugrahmen (4) verschwenkbar gelagerten und mit der Achse (2) bewegungsverbundenen Längslenker (13; 24, 25) angeordnet ist.

3. Fahrzeug nach Anspruch 1 oder 2, **dadurch gekennzeichnet,** daß die Hubbegrenzungseinrichtung (11) am Fahrzeugrahmen oder am Achskörper (4; 45, 62) gelagert ist.

4. Fahrzeug nach Anspruch 3, **dadurch gekennzeichnet,** daß die Hubbegrenzungseinrichtung (11) zwischen einer Arretierstellung (14) und einer Freigabestellung (15) am Fahrzeugrahmen (4; 45, 62) verschwenkbar gelagert ist.

5. Fahrzeug nach wenigstens einem der vorangehenden Ansprüche, **dadurch gekennzeichnet,** daß zum Halten der Achse (2) in wenigstens einer Stellung die Hubbegrenzungseinrichtung (11) als Haltehaken (41) mit wenigstens einer Haltenase (42, 42') ausgebildet ist, welche mit einer an der Achse (2) angeordneten Halteeinrichtung (48, 49) in Eingriff steht.

6. Fahrzeug nach Anspruch 5, **dadurch gekennzeichnet,** daß die Halteeinrichtung (48, 49) mit einem in Richtung des Haltehaken (41) abstehenden Haltebügel (48) ausgebildet ist.

7. Fahrzeug nach Anspruch 6, **dadurch gekennzeichnet,** daß der Haltehaken (41) mehrere Haltenasen (42, 42') mit jeweils einer Aufnahmemulde (50) für den Haltebügel (48) und eine zwischen benachbarten Haltenasen (42) verlaufende Gleitschräge (51) aufweist.

8. Fahrzeug nach Anspruch 7, **dadurch gekennzeichnet,** daß zum Einrasten des Haltebügels (48) in aufeinanderfolgenden Aufnahmemulden (50) die Gleitschräge (51) in Richtung des Fahrzeugrahmens (4) unter einem spitzen Winkel ($\alpha$) in Richtung zur Achse (2) geneigt verläuft.

9. Fahrzeug nach wenigstens einem der vorangehenden Ansprüche, **dadurch gekennzeichnet,** daß der Haltehaken (41) wenigstens in Richtung seiner Arretierstellung (14)) kraftbeaufschlagt ist.

10. Fahrzeug nach wenigstens einem der vorangehenden Ansprüche, **dadurch gekennzeichnet,** daß der Haltehaken (41) als zweiarmiger Hebel (46, 47) ausgebildet ist, wobei an einem der Achsen (2) zugeordneten Achshebelarm (46) die Haltenasen (42) ausgebildet sind und an dem anderen Schwenkhebelarm (47) ein Antrieb (54, 58) zum Verschwenken des Haltehakens (41) um ein Hebeldrehlager (45) angeordnet ist.

**11.** Fahrzeug nach Anspruch 10, **dadurch gekennzeichnet,** daß der Antrieb (54, 58) als doppeltwirkender Pneumatikzylinder ausgebildet ist.

**12.** Fahrzeug nach wenigstens einem der vorangehenden Ansprüche, **dadurch gekennzeichnet,** daß zum Halten des Haltehakens (41) in seiner Arretier- (14) und/oder Freigabestellung (15) wenigstens ein Federelement (63) zwischen Fahrzeugrahmen (4) und dem Haltehaken (41) angeordnet ist.

**13.** Fahrzeug nach Anspruch 12, **dadurch gekennzeichnet,** daß das Federelement (63) mit einem Ende (64) am Fahrzeugrahmen (4) oberhalb des Hebeldrehlagers und dem Hebeldrehlager(45) in Richtung der Arretierstellung (14) des Haltehakens (41) vorgeordnet und mit ihrem anderen Ende (65) am Achshebelarm (46) angeordnet ist.

**14.** Fahrzeug (1) mit pneumatisch be- und entlüftbaren Federbälgen (3) nach wenigstens einem der vorangehenden Ansprüche, **dadurch gekennzeichnet,** daß der Pneumatikzylinder (54, 58) in Abhängigkeit von den Luftfederbälgen (3) zugeordneten Hebe- und Senkventil (oder -ventilen) (35) steuerbar ist.

**15.** Fahrzeug nach Anspruch 13 oder 14, **dadurch gekennzeichnet,** daß zur Be- und Entlüftung die Federbälge (3) mit einem Druckvorratsbehälter verbunden sind.

**16.** Fahrzeug nach Anspruch 15, **dadurch gekennzeichnet,** daß zwischen den Federbälgen (3) und dem Druckvorratsbehälter wenigstens ein steuerbares Zwei-Wege-Ventil angeordnet ist.

**17.** Fahrzeug nach Anspruch 16, **dadurch gekennzeichnet,** daß das Zwei-Wege-Ventil zur Aufrechterhaltung eines jeweils vorgegebenen Innendrucks im Federbalg (3) mit Meßeinrichugnen zur Bestimmung des Unter- und/oder Überdrucks beim Anheben und/oder Absenken des Fahrzeugs (1) verbunden ist.

**18.** Fahrzeug nach wenigstens einem der vorangehenden Ansprüche, **dadurch gekennzeichnet,** daß der Pneumatikzylinder (54, 58) und/oder das Zwei-Wege-Ventil zur Betätigung der Federbälge (3) automatisch oder manuell steuerbar ist.

**19.** Fahrzeug nach wenigstens einem der vorangehenden Ansprüche, **dadurch gekennzeichnet,** daß die Federbälge (3) zumindest eines Achsaggregats gleichzeitig be- oder entlüftbar sind.

FIG.1

EP 0 514 944 A2

FIG.2

10

FIG.3

FIG.4

FIG.5